Europäisches Patentamt

European Patent Office

Office européen des brevets

(11) Numéro de publication: **0 070 763**
**B1**

(12) **FASCICULE DE BREVET EUROPEEN**

(45) Date de publication du fascicule du brevet: **08.05.85**

(51) Int. Cl.⁴: **B 29 C 45/10, B 29 C 45/16**

(21) Numéro de dépôt: **82401278.5**

(22) Date de dépôt: **07.07.82**

(54) **Dispositif de moulage de pièces composites en matière plastique.**

(30) Priorité: **17.07.81 FR 8113996**

(43) Date de publication de la demande:
**26.01.83 Bulletin 83/04**

(45) Mention de la délivrance du brevet:
**08.05.85 Bulletin 85/19**

(84) Etats contractants désignés:
**AT BE CH DE GB IT LI NL SE**

(56) Documents cités:
**DE-A-2 709 000**
**FR-A-1 254 438**
**FR-A-2 255 152**
**FR-A-2 397 280**
**GB-A-1 503 039**
**US-A-3 164 864**

(73) Titulaire: **COMPAGNIE DES PRODUITS INDUSTRIELS DE L'OUEST (C.P.I.O.)**
**Boîte Postale 1226 Zone Industrielle de Nantes Carquefou**
**F-44023 Nantes Cedex (FR)**

(72) Inventeur: **Sarrazin, Jean-Michel**
**Les Hauts-Vallons**
**F-44850 Le Cellier (FR)**
Inventeur: **Chessel, Bernard**
**12, rue Maurice Pruniaux**
**F-92220 Bagneux (FR)**

(74) Mandataire: **Réal, Jacques et al**
**Régie Nationale des Usines Renault 8-10, avenue Emile Zola**
**F-92109 Boulogne-Billancourt (FR)**

Courier Press, Leamington Spa, England.

## Description

La présente invention est relative à un dispositif de moulage et d'assemblage de pièces ainsi qu'à un ensemble de pièces assemblées à l'aide de ce dispositif. Plus particulièrement, l'invention concerne un tel dispositif, dans son application à la réalisation d'un ensemble constitué d'une vitre en matière plastique transparente et d'un organe de support de cette vitre conçu, par exemple, pour équiper un véhicule automobile.

Dans l'industrie automobile, on équipe actuellement les véhicules de vitres en verre, ces vitres étant maintenues en place par divers organes de support et/ou de fixation. Cette solution présente divers inconvénients: elle exige la réalisation de pièces variées en nombre élevé, elle pose des problèmes d'assemblage et d'étanchéité et le poids des ensembles constitués par les vitres et les organes de support associés est relativement important.

La présente invention a pour but de fournir un dispositif pour réaliser de tels ensembles, qui ne présentent pas ces inconvénients.

On connaît déjà, en particulier par la demande de brevet allemand publiée 2 709 000 un dispositif de moulage en deux phases d'un produit complexe. Selon la première, on met en oeuvre un premier ensemble constitué d'une cavité de moulage dans laquelle débouche un canal d'injection, permettant ainsi l'obtention d'une ébauche de la pièce à obtenir. La constitution finale de cette dernière est déterminée lors d'une seconde phase de moulage dans un second ensemble constitué également d'une cavité de moulage associée à un canal d'injection qui lui est propre, le dispositif comprenant au moins un noyau mobile entre une position où il occupe la place d'un passage à ménager dans l'ébauche dans la cavité de moulage et une deuxième position où il dégage ce passage, après moulage de l'ébauche et ses moyens de commande associés.

Le dispositif précédent donne lieu à des joints d'étanchéité composites.

Bien que le dispositif précédent puisse être considéré comme l'état de la technique antérieure en la matière, l'obtention de pièces de carrosserie telles qu'une vitre et son support selon l'invention implique la mise en oeuvre d'un dispositif de moulage spécifique. Celui-ci est caractérisé en ce que la seconde cavité de moulage déterminée par deux pavés est amenée par un vérin d'une position correspondante à la première phase de moulage donnant naissance au support, dans laquelle ladite cavité est hors circuit, à une seconde position, correspondant à la deuxième phase de moulage, dans laquelle la cavité de moulage est mise en relation d'une part avec le canal d'injection qui lui est propre, et d'autre part avec une ouverture dans la première cavité de moulage (2') lui permettant de faire entrer en contact la matière synthétique transparente constitutive de la vitre avec le support précédemment obtenu.

Ce dispositif se prête, notamment, à la réalisation d'ensembles vitre-montant particulièrement légers, lorsqu'on forme la vitre avec une matière plastique transparente. L'ensemble est monobloc, ce qui facilite les problèmes d'assemblage. La soudure et/ou la liaison mécanique des pièces de l'ensemble permettent de résoudre les problèmes d'étanchéité qui se posent dans la réalisation d'un ensemble vitre-montant destiné à un véhicule automobile.

D'autres buts et avantages de la présente invention apparaîtront à la lecture de la description suivante et des figures jointes, données à titre illustratif mais non limitatif.

La Figure 1 représente une vitre en matière plastique et son montant, l'ensemble étant par un procédé de moulage connu en soi.

La Figure 2 est une vue partielle, en coupe, du dispositif de moulage et d'assemblage suivant l'invention, permettant de réaliser l'ensemble de la Figure 1; et

la Figure 3 est une vue similaire à celle de la Figure 2, prise au moment de l'étape d'assemblage du procédé.

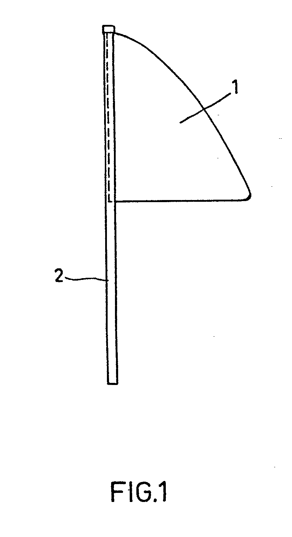

On se réfère à la Figure 1 où l'on a représente un ensemble constitué d'une vitre 1 en matière plastique transparente fixée sur un montant 2. Un tel ensemble peut être avantageusement utilisé pour constituer une partie du vitrage d'un véhicule automobile. L'utilisation d'une matière plastique transparente permet de réaliser une vitre beaucoup plus légère que celles habituellement utilisées dans l'industrie automobile, qui sont en verre.

Outre cet avantage de poids, important pour un véhicule, l'utilisation d'une matière plastique pour constituer la vitre permet, grâce à la présente invention, de mouler et d'assembler en une seule séquence d'opérations automatisées, un ensemble vitre-montant monobloc.

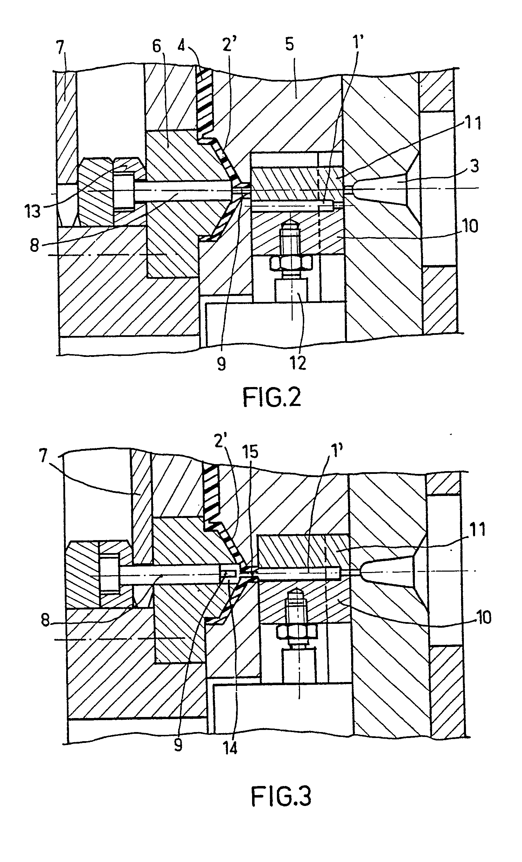

Pour réaliser cet ensemble, on utilise le dispositif de moulage et d'assemblage représenté sur la Figure 2. Ce dispositif comprend essentiellement deux cavités de moulage 1' et 2' destinées à recevoir, par injection, les matières constituant la vitre et le montant, respectivement. Des canaux d'injection 3 et 4 alimentent les cavités 1' et 2', respectivement.

La cavité 2' est limitée par deux demi-coquilles 5 et 6. Sur la Figure 2, une pièce 7 maintient une tige 8 mobile suivant son axe, dans une position où un noyau 9, formé à l'extrémité droite de la tige, traverse la cavité 2' pour s'appuyer sur un pavé 10 mobile perpendiculairement à la direction de déplacement de la tige.

Ce pavé 10 est solidaire d'un deuxième pavé 11. Ils limitent ensemble la cavité 1' destinée au moulage de la vitre. Un vérin 12 déplace l'ensemble des deux pavés 10 et 11 entre les positions représentées aux Figures 2 et 3, respectivement. Dans la position de la Figure 2, la cavité 1' ne communique pas avec le canal d'injection 3. Dans la position de la Figure 3, cette cavité et ce canal communiquent.

La tige 8 est mobile entre la position représentée sur la Figure 2 et celle représentée sur la Figure 3. Dans cette dernière position, le noyau 9 ne porte plur sur le pavé 10. Il est retiré vers la gauche, du point de vue de cette figure, de manière à mettre en communication les cavités 1′ et 2′, dans des conditions qui seront précisées plus loin en liaison avec la description du fonctionnement du dispositif suivant l'invention.

La pièce 7 est mobile entre les positions représentés aux Figures 1 et 3 pour commander la position du noyau 9. Dans la position de la Figure 3, la pièce 7 vient s'intercaler (sous l'action de moyens non représentés qui peuvent prendre diverses formes connues de l'homme de métier) entre la demi-coquille 6 et la base 13 de la tige 8, pour maintenir le noyau 9 hors de la chambre 2′.

Pour réaliser l'ensemble de la Figure 1 à l'aide du dispositif des Figures 2 et 3, on établit pour celui-ci la séquence de fonctionnement suivante: le dispositif se trouvant dans l'état de la Figure 2, on injecte dans la cavité 2′, par le canal 4, de la matière destinée à constituer le montant 2. On remarquera qu'alors la matière se moulera autour du noyau 9, placé contre le pavé 10.

Dès que la matière contenue dans la cavité 2′ a pris de la solidité, des moyens (non représentés) font passer la pièce 7 et le vérin 12 des positions de la Figure 2 à celles de la Figure 3. Le noyau 9 dégage alors une petite enceinte 14 qui communique avec la cavité 1′ grâce à un passage tel qu'un trou 15 formé, dans la matière du montant 2 moulé dans la cavité 2′, par le noyau 9 tandis qu'il se trouvait dans la position de la Figure 2, pendant l'injection de la matière du montant. L'enceinte 14 est limitée par le noyau 9, la tige 8, une partie de l'alésage de la coquille 6 dans lequel la tige 8 coulisse, et par la partie du montant 2 qui entoure le trou 15.

Le montant 2 étant moulé et le dispositif suivant l'invention se trouvant dans l'état représenté sur la Figure 3, on injecte dans la cavité 1′, par le canal 3, la matière plastique transparente destinée à fermer la vitre 2. Cette injection est rendue possible par l'action du vérin 12 qui a déplacé les pavés 10 et 11 de manière à aligner simultanément, d'une part, la cavité 1′ et le trou 15, d'autre part, la cavité 1′ et le canal d'injection 3.

La matière injectée par le canal 3 remplit non seulement la cavité 1′ mais traverse aussi le trou 15 pour combler la petite enceinte 14 qui s'étend au delà du trou. Après solidification et refroidissement, la vitre moulée dans la cavité 1′ se trouve solidement fixée au montant 2, moulé dans la cavité 2′, grâce à la matière de la vitre qui remplit le trou 15 et l'enceinte 14 en formant ainsi un organe tel qu'un téton d'assemblage de la vitre et du montant. La tête de ce téton, formée dans l'enceinte 14, présente une dimension transversale supérieure à celle du trou 15. Ainsi est assurée l'inséparabilité de la vitre et du montant.

On sort l'ensemble montant-vitre grâce à des moyens d'ouverture du moule (non représenté) bien connus de l'homme de métier.

Le cycle de fonctionnement décrit ci-dessus peut reprendre aussitôt, ce qui assure au dispositif suivant l'invention une grande productivité, dégrévée des temps et coûts d'assemblage que l'on observe dans les procédés de fabrication classiques d'ensembles montant-vitre.

On remarquera que l'assemblage du montant et de la vitre est assuré par soudure et/ou par liaison mécanique. En effet, on peut régler convenablement la séquence d'injection des deux matières plastiques de manière que celles-ci viennent en contact à une température favorisant leur soudure. En outre, dans le cas où ces matières plastiques sont incompatibles du point de vue de la soudure, on obtient une forte liaison mécanique du montant et de la vitre grâce à la forme décrite plus haut du téton d'assemblage moulé dans l'enceinte 14 et le trou 15.

Ainsi, l'invention permet de réaliser un ensemble montant-vitre léger, grâce au moulage d'une vitre en matière plastique transparente, dans lequel chaque élément est constitué d'une matière appropriée à se fonction. Dans la cas particulier de d'ensemble décrit ci-dessus, on utilise une matière transparente pour la vitre et une matière présentant une bonne résistance mécanique pour le montant. Malgré la variété des matières assemblées, l'ensemble présente un caractère monobloc qui facilite son montage et la résolution des problèmes d'étanchéité, particulièrement importants quand cet ensemble est destiné à un véhicule automobile. En outre, l'utlisation d'éléments moulés autorise un grand choix de formes et de coloris pour les éléments de l'ensemble.

Du fait de la concomitance des opérations de moulage et d'assemblage, la productivité du dispositif suivant l'invention peut être très élevée. La séquence de fonctionnement de ce dispositif se prête d'ailleurs à une automatisation, favorable à cette productivité, par des moyens de commande classiques bien connus de l'homme de l'art.

Bien entendu, l'invention n'est pas limitée à la réalisation d'ensembles constitués d'une vitre et d'un montant. On pourrait l'adapter sans difficulté, par exemple, au surmoulage de joints d'étanchéité sur des vitres. Plus généralement, l'invention s'étend à la réalisation de tout ensemble composé de pièces moulées et assemblées à l'aide d'organes d'assemblage venus pendant les opérations de moulage.

**Revendications**

1. Dispositif de moulage du type utilisant pors d'une première phase de moulage d'un produit complexe tel qu'une vitre et son support, un premier ensemble constitué d'une cavité de moulage (2′) dans laquelle débouche un canal d'injection (4) déterminant une ébauche de la pièce à obtenir, sa constitution finale étant déterminée lors d'une seconde phase de moulage à l'aide d'un second ensemble constitué également d'une cavité de moulage (1′) associée à un canal d'injection (3) qui lui est propre, le dispositif comprenant au moins un noyau (9), mobile entre une position où il occupe la place d'un passage à ménager dans l'ébauche dans la cavité de moulage (2') et une deuxiéme position où il dégage ce passage après moulage de l'ébauche, et ses moyens de commande associés (8, 7), caractérisé en ce que la seconde cavité de moulage (1') déterminée par deux pavés (10—11) est amenée par un vérin (12) d'une position correspondante à la première phase de moulage donnant naissance au support (2), dans laquelle ladite cavité (1') est hors circuit, à une seconde position, correspondant à la deuxième phase de moulage, dans laquelle la cavité de moulage (1') est mise en relation d'une part avec le canal l'injection (3) qui lui est propre et d'autre part avec une ouverture dans la première cavité de moulage (2') lui permettant de faire entrer en contact la matière synthétique transparente constitutive de la vitre (1) avec le support (2) précédemment obtenu.

2. Produit composite résultant de la mise en oeuvre du dispositif selon la revendication 1, caractérisé en ce qu'il constitue un ensemble monobloc comprenant une vitre (1) en matière plastique transparente assemblée à un support (2) en matière synthétique choisie pour sa résistance mécanique, la liaison entre ces deux éléments comportant au moins un têton d'assemblage venu de moulage avec la vitre (1) et dont la tête dépasse de la face extérieure de support (2).

**Patentansprüche**

1. Gießvorrichtung, bei der während der ersten Gießphase eines komplizierten Produkts, wie z.B. einer Fensterscheibe und ihrer Halterung, eine erste Anordnung verwendet wird, die aus einem Gießraum (2') besteht, in dem ein Einlaßkanal (4) mündet zu Formung eines Rohling des zu erhaltenden Produktes, dessen Endgestalt während einer zweiten Gießphase mittels einer zweiten Anordnung erhalten wird, die ebenfalls aus einem Gießraum (1') besteht, der einem zugehörigem Einlaßkanal (3) zugeordnet ist, wobei die Vorrichtung wenigstens einen Kern (9) aufweist, der zwischen einer Stellung, in der er die Stellung eines Durchlasses einnimmt, der im Rohling in dem Gießraum (2') zu formen ist une einer zweiten Stellung, in der erdiesen Durchlaß nach dem Gießen des Rohlings freigibt, beweglich ist, sowie zugehörige Steuermittel (8, 7) aufweist, dadurch gekennzeichnet, daß der durch zwei Blöcke (10, 11) begrenzte Gießraum (1') mittels eines Druckhebers (12) von einer Stellung, die der ersten Gießphase zur Herstellung der Halterung (2) entspricht, in der der Raum (1') abgeschlossen ist, in eine zweite Stellung gebracht wird, die der zweiten Gießphase entspricht, in der der Gießraum (1') einerseits mit dem zugehörigen Einlaßkanal (3) und mit einer Öffnung im ersten Gießraum (2') andererseits verbunden ist, um ihm zu ermöglichen, daß der die Fensterscheibe (1) bildende transparante Kunststoff mit der vorher erhaltenen Halterung (2) in Berührung gelangt.

2. Zusammengesetztes Produkt, erhalten mittels der im Anspruch 1 angegebenen Vorrichtung, dadurch gekennzeichnet, daß es aus einem einstückigen Teil besteht, das eine Fensterscheibe (1) aus transparentem Kunststoff enthält, die mit einer Halterung (2) aus einem Kunststoff geeigneter mechanischer Festigkeit vereinigt ist, wobei die Verbindung zwischen diesen beiden Teilen wenigstens einen Verbindungsfalz aufweist, der vom Gießen der Fensterscheibe (1) stammt und dessen Oberteil über die Außenfläche der Halterung (2) hinausragt.

**Claims**

1. A moulding apparatus of the type which, in a first phase of moulding a complex product such as a window and its carrier, uses a first assembly formed by a mould cavity (2') into which opens an injection passage (4) for defining a blank of the component to be produced, the final constitution thereof being defined in a second moulding phase by means of a second assembly which also comprises a mould cavity (1') associated with an injection passage (3) which is particular thereto, the apparatus comprising at least a core portion (9) which is movable between a position in which it occupies the place of a passage to be provided in the blank in the mould cavity (2') and a second position in which it is disengaged from said passage after moulding of the blank, and its associated control means (8, 7), characterised in that the second mould cavity (1') which is defined by two slab members (10, 11) is moved by a jack (12) from a position corresponding to the first moulding phase which produces the carrier (2), in which said cavity (1') is out of circuit, to a second position corresponding to the second moulding phase in which the mould cavity (1) is brought into relationship on the one hand with the injection passage (3) which is particular thereto and on the other hand with an opening in the first mould cavity (2') permitting it to cause the transparent synthetic material for forming the window pane (1) to come into contact with the carrier (2) that was previously produced.

2. A composite product resulting from operation of the apparatus according to claim 1 characterised in that it comprises a one-piece assembly including a window pane (1) of transparent plastics material assembled to a carrier (2) of a synthetic material selected for its mechanical strength, the connection between the two elements comprising at least one assembly stud which is moulded with the window pane (1) and whose head projects beyond the outside face of the carrier (2).

FIG.1

FIG.2

FIG.3